# EUROPÄISCHE PATENTSCHRIFT

(11) **EP 2 300 812 B1**
(45) Veröffentlichungstag und Bekanntmachung des Hinweises auf die Patenterteilung: **02.11.2016**
(21) Anmeldenummer: 09779935.7
(22) Anmeldetag: 25.06.2009
(51) Int. Cl.: G01N 27/407, G01N 27/41, G01N 27/417

(54) **SENSORELEMENT UND VERFAHREN ZUR BESTIMMUNG VON GASKOMPONENTEN IN GASGEMISCHEN SOWIE DEREN VERWENDUNG**
SENSOR ELEMENT AND METHOD FOR DETERMINING GAS COMPONENTS IN GAS MIXTURES AND USE THEREOF
ÉLÉMENT CAPTEUR ET PROCÉDÉ DE DÉTERMINATION DE COMPOSANTS GAZEUX DANS DES MÉLANGES GAZEUX ET LEUR UTILISATION

(30) Priorität: 10.07.2008 DE 102008040314; 05.12.2008 DE 102008044374
(43) Veröffentlichungstag der Anmeldung: 30.03.2011
(73) Patentinhaber: Robert Bosch GmbH, 70442 Stuttgart (DE)
(72) Erfinder: LIEMERSDORF, Dirk, 70839 Gerlingen (DE); CLASSEN, Thomas, 70567 Stuttgart (DE); SILLMANN, Benjamin, 70199 Stuttgart (DE)
(86) Internationale Anmeldenummer: PCT/EP2009/057935
(87) Internationale Veröffentlichungsnummer: WO 2010/003826

(56) Entgegenhaltungen:
- EP-A- 1 359 411
- EP-A- 1 635 171
- DE-A1- 3 917 710
- DE-A1- 10 115 872
- DE-A1- 19 932 048
- DE-A1-102004 042 027
- DE-A1-102006 014 681

## Beschreibung

Die Erfindung bezieht sich auf ein Sensorelement und auf ein Verfahren zur Bestimmung von Gaskomponenten in Gasgemischen sowie auf deren Verwendung nach dem Oberbegriff der unabhängigen Patentansprüche.

### Stand der Technik

Im Zuge einer fortschreitenden Umweltgesetzgebung wächst der Bedarf an Sensoren, mit deren Hilfe auch kleinste Schadstoffmengen zuverlässig bestimmt werden können. Hierbei spielen vor allen Dingen Messverfahren eine große Rolle, die die Bestimmung von gasförmigen Schadstoffen im ppm-Bereich ermöglichen. Dabei stellt jedoch insbesondere die Bestimmung des Gehaltes an Stickoxiden in Verbrennungsabgasen aufgrund des parallel vorliegenden hohen Sauerstoffanteils eine besondere Herausforderung dar. Dies ist für einen möglichen Einsatz als OBD-Sensor zur Erfüllung der kommenden Abgasgesetzgebung von Bedeutung, denn es werden in diesem Kontext beispielsweise für Stickoxide Grenzwerte vorgeschrieben, welche unterhalb der Auflösungsgrenze aktuell erhältlicher Festelektrolytgassensoren liegen.

Um dieser Problematik Rechnung zu tragen, ist beispielsweise aus der noch unveröffentlichten DE 10 2007 050 119 A eine Speichervorrichtung für ein Sensorelement zur qualitativen beziehungsweise quantitativen Bestimmung insbesondere von Stickoxiden in einem Gasgemisch zu entnehmen. Der darin beschriebenen Speichervorrichtung beziehungsweise dem diese enthaltenden Sensorelement liegt die Überlegung zugrunde, dass zu bestimmende Gaskomponenten, die in einem zu untersuchenden Gasgemisch nur in geringer Konzentration vorliegen, über einen gewissen Zeitraum akkumuliert werden. Dazu wird innerhalb des Sensorelements eine Speichervorrichtung vorgesehen, die vergiftungs- und temperaturwechselbeständig ist.

Die Bestimmung der zu detektierenden Gaskomponente erfolgt diskontinuierlich, wobei in einer Sammelphase zunächst die zu bestimmende Gaskomponente in einem Speichermittel gespeichert und der Speicherzustand dieser Speichermittels erfasst wird. In einer nachfolgenden Regenerationsphase wird dann die gespeicherte zu detektierende Gaskomponente beispielsweise durch Temperaturerhöhung aus dem Speichermittel wieder entfernt. Alternativ kann die während der Regenerationsphase frei gesetzte zu detektierende Gaskomponente erfasst und deren Konzentration ermittelt werden.

Weiterhin ist aus der EP 1 739 416 A2 ein Sensor zur Bestimmung von Gaskomponenten in Gasgemischen bekannt, der unter anderem der Bestimmung von Stickoxiden dienen kann. Der beschriebene Gassensor umfasst mehrere elektrochemische Zellen und einen zuflussbegrenzten Raum, in dem sich eine Referenzgasatmosphäre als Bezugspunkt für die Bestimmung der zu detektierenden Gaskomponente befindet. In diesem zuflussgegrenzten Raum befinden sich innere Elektroden von elektrochemischen Zellen, mit deren Hilfe der Gehalt an zu detektierender Gaskomponente auf voltammetrischem Wege bestimmt werden kann.

Weitere Sensoren sind aus der DE 10115 872 A1, der DE 10 2004 042 027 A1, der DE 199 32 048 A1, der DE 39 17 710 A1, der DE 102006 014 681 A1 und der EP 1 635 171 A2 bekannt.

### Offenbarung der Erfindung

Aufgabe der vorliegenden Erfindung ist es, ein Sensorelement beziehungsweise ein Verfahren zur Bestimmung von Gaskomponenten in Gasgemischen bereit zustellen, das die Bestimmung von Gaskomponenten geringer Konzentration in einem Gasgemisch neben beispielsweise größeren Mengen an Sauerstoff gestattet.

Die der Erfindung zugrunde liegende Aufgabe wird durch ein Sensorelement beziehungsweise durch ein Verfahren mit den Merkmalen der unabhängigen Ansprüche in vorteilhafter Weise gelöst. Dazu wird erfindungsgemäß eine der zu bestimmenden Gaskomponente äquivalente Menge an Sauerstoff in einem gasdicht abgeschlossenen inneren Raum des Sensorelements akkumuliert. Nachfolgend erfolgt eine Entfernung des akkumulierten Sauerstoffs durch Anlegen einer Pumpspannung an eine elektrochemische Pumpzelle des Sensorelements, wobei der Sauerstoff aus dem gasdicht abgeschlossenen inneren Raum des Sensorelements entfernt wird.

Der besondere Vorteil dieser Vorgehensweise besteht darin, dass durch Akkumulierung einer der Menge an zu bestimmender Gaskomponente äquivalenten Menge an Sauerstoff eine größere absolute Menge an einem der zu detektierenden Gaskomponente äquivalenten Gas generiert wird, so dass sich die Messgenauigkeit aufgrund eines günstigeren Signal/Rauschverhältnises deutlich verbessert.

Gegenüber der im Stand der Technik bereits vorgeschlagenen Lösung wird im vorliegenden Fall nicht die zu detektierende Gaskomponente selbst akkumuliert, sondern eine dazu äquivalente Menge an Sauerstoff. Dies birgt den Vorteil, dass Sauerstoff im Vergleich zu Gaskomponenten geringer Konzentration wie Stickoxiden, Kohlenwasserstoffen oder Ammoniak thermodynamisch deutlich stabiler ist. Auf diese Weise und auch durch die räumliche Trennung der Akkumulierungszone von dem zu bestimmenden Gasgemisch wird die Gefahr minimert, dass während der Akkumulierungsphase ein gewisser Anteil der zu detektierenden Gaskomponente durch Abreaktion verloren geht. Für eine abschließende Messung der Gasmenge steht somit die gesamte Menge an akkumuliertem Gas einer Bestimmung zur Verfügung.

Weitere vorteilhafte Ausführungsformen der vorliegenden Erfindung sind Gegenstand der Unteransprüche.

So ist von Vorteil, wenn die Akkumulierung einer der Menge an zu detektierender Gaskomponente äquivalenten Menge an Sauerstoff mittels einer elektrochemischen Pumpzelle erfolgt, deren eine Elektrode dem zu detektierenden Gasgemisch ausgesetzt ist und deren weitere Elektrode einem inneren gasdicht abgeschlossenen Raum des Sensorelements ausgesetzt ist. Auf diese Weise kann ein definierter Transport von Sauerstoffionen über Festelektrolytschichten des Sensorelements in den inneren gasdicht abgeschlossenen Raum des Sensorelements gewährleistet werden. Gemäß einer besonders einfachen Ausführungsform sind die Elektroden dieser elektrochemischen Pumpzelle über einen trimmbaren Widerstand miteinander verbunden.

Diese Ausführungsform ermöglicht den Betrieb der elektrochemischen Pumpzelle als sogenannte autonome Pumpzelle. In diesem Fall ist es nicht nötig, der elektrochemischen Pumpzelle extern eine Pumpspannung aufzuprägen. Vielmehr resultiert die Pumpspannung aus Konzentrationsdifferenzen zwischen dem zu detektierenden Gasgemisch und der im inneren gasdichten Raum des Sensorelements existierenden Gasatmosphäre.

Die Höhe dieser Pumpaktivität kann durch Trimmen des Ohmschen Widerstandes eingestellt werden, über den die beiden Pumpelektroden der elektrochemischen Pumpzelle kurz geschlossen sind. Der Verzicht auf eine extern an die Elektroden der elektrochemischen Pumpzelle aufgeprägten Pumpspannung führt zu einem vereinfachten Sensorlayout, da auf eine externe Kontaktierung der Elektroden verzichtet werden kann.

Weiterhin ist von Vorteil, wenn die dem zu detektierenden Gasgemisch ausgesetzte Pumpelektrode der elektrochemischen Pumpzelle als sogenannte Mischpotentialelektrode ausgebildet ist. Der Begriff einer Mischpotentialelektrode bedeutet, dass diese eine eingeschränkte katalytische Aktivität aufweist, sodass Gaskomponenten eines Gasgemischs - anders als an katalytisch aktiven Elektroden wie beispielsweise Platinelektroden - nicht miteinander unter Ausbildung des thermodynamischen Gleichgewichtszustands reagieren. Vielmehr führt das Material der Mischpotentialelektrode dazu, dass eine Einstellung des thermodynamischen Gleichgewichts kinetisch gehemmt wird.

Somit lassen sich beispielsweise reduzierbare Gaskomponenten eines Gasgemischs neben weiteren, beispielsweise oxidierbaren Gaskomponenten eines Gasgemischs nachweisen. Bei Verwendung einer katalytisch aktiven Elektrode wäre dagegen jedoch nur Reaktionsprodukte beider Gase wie beispielsweise Wasser oder Kohlenmonoxid nachzuweisen.

Gemäß einer weiteren vorteilhaften Ausführungsform ist innerhalb des beschriebenen gasdicht abgeschlossenen inneren Raums des Sensorelements eine Schicht eines sauerstoffspeichernden bspw. keramischen Materials vorgesehen.

Der Vorteil dieser Ausführungsform besteht darin, dass während einer Sammelphase elektrochemisch stetig Sauerstoff in einen gasdicht abgeschlossenen inneren Raum des Sensorelements gepumpt wird. Bei diesem Vorgang ist je nach Dimensionierung des inneren Raums ein Druckanstieg bzw. eine Erhöhung der Sauerstoffkonzentration zu erwarten. Dies führt direkt zu einer Verminderung der Pumpleistung der am Transport des Sauerstoffs in die gasdicht abgeschlossene innere Kammer des Sensorelements beteiligten elektrochemischen Pumpzelle. Wird jedoch im Inneren des gasdicht abgeschlossenen inneren Raums des Sensorelements ein sauerstoffspeicherndes Material vorgesehen, so nimmt dieses den in das Innere des gasdicht abgeschlossenen inneren Raums transportierten Sauerstoff auf und dieser steht in absorbierter Form einer Bestimmung zur Verfügung.

Gemäß einer besonders vorteilhaften Ausführungsform ist in diesem Fall ein weiteres Heizelement vorgesehen, das im Bereich der erwähnten Schicht eines sauerstoffspeichernden keramischen Materials positioniert ist, sodass diese Schicht während des Messvorgangs erwärmt wird und den gespeicherten Sauerstoff für eine Messung an die Gasphase des gasdicht abgeschlossenen inneren Raums des Sensorelements abgibt. Auf diese Weise können große Menge an Sauerstoff akkumuliert werden, sodass ein besonders genaues Sensorsignal des Sensorelements resultiert.

Gemäß der Erfindung besteht die Maßnahme zur Verbesserung der Messgenauigkeit des beschriebenen Sensorelements darin, innerhalb des Sensorelements einen weiteren inneren Gasraum in form eines Messgasraums vorzusehen, der in fluidleitendem Kontakt mit dem zu bestimmenden Gasgemisch steht, wobei in diesem Messgasraum eine Elektrode einer weiteren elektrochemischen Zelle des Sensorelements vorgesehen ist, die im Gasgemisch enthaltenen molekularen Sauerstoff katalytisch zersetzt.

Auf diese Weise kann im Gasgemisch enthaltener Sauerstoff selektiv aus dem Messgas entfernt werden, ohne dass die detektierende Gaskomponente zersetzt wird. Auf diese Weise wird das Konzentrationsverhältnis von zu detektierender Komponente zu im Gasgemisch enthaltenem Sauerstoff verbessert, sodass eine geringere Querempfindlichkeit auf Sauerstoff resultiert.

Kurze Beschreibung der Zeichnung
- Figur 1: einen schematischen Längsschnitt durch ein Sensorelement

- Figur 2: eine schematische Darstellung der Beschaltung eines Sensorelements gemäß der Figur 1,

- Figur 3: einen schematischen Längsschnitt eines Sensorelements gemäß einer ersten Variante des in Figur 1 dargestellten Sensorelements,
- Figur 4: einen schematischen Längsschnitt eines Sensorelements gemäß einer zweiten Variante des in Figur 1 dargestellten Sensorelements,
- Figur 5: einen schematischen Längsschnitt eines Sensorelements gemäß einer dritten Variante des in Figur 1 dargestellten Sensorelements,
- Figur 6: einen schematischen Längsschnitt eines Sensorelements gemäß einer vierten Variante des in Figur 1 dargestellten Sensorelements,
- Figur 7: eine Aufsichtsdarstellung des in Figur 6 dargestellten Sensorelement,
- Figur 8: einen schematischen Längsschnitt eines Sensorelements gemäß einer fünften Variante des in Figur 1 dargestellten Sensorelements sowie eine Aufsichtsdarstellung und eine schematische Darstellung der Beschaltung desselben,
- Figur 9: einen schematischen Längsschnitt eines Sensorelements,

- Figur 10: einen schematischen Längsschnitt eines Sensorelements gemäß einer ersten Variante des in Figur 9 dargestellten Sensorelements,
- Figur 11: einen schematischen Längsschnitt eines Sensorelements gemäß einer zweiten Variante des in Figur 9 dargestellten Sensorelements,
- Figur 12: einen schematischen Längsschnitt eines Sensorelements gemäß der vorliegenden Erfindung,
- Figur 13: einen Längsschnitt eines Sensorelements gemäß einer ersten Variante des in Figur 12 dargestellten Sensorelements,
- Figur 14: einen schematischen Längsschnitt eines Sensorelements gemäß einer zweiten Variante des in Figur 12 dargestellten Sensorelements,

- Figur 15: einen schematischen Längsschnitt eines Sensorelements gemäß einer dritten Variante des in Figur 12 dargestellten Sensorelements,
- Figur 16: einen schematischen Längsschnitt eines Sensorelements gemäß einer vierten Variante des in Figur 12 dargestellten Sensorelements und
- Figur 17: einen schematischen Längsschnitt eines Sensorelements gemäß einer weiteren Ausführungsform der vorliegenden Erfindung.

### Beschreibung der Ausführungsbeispiele

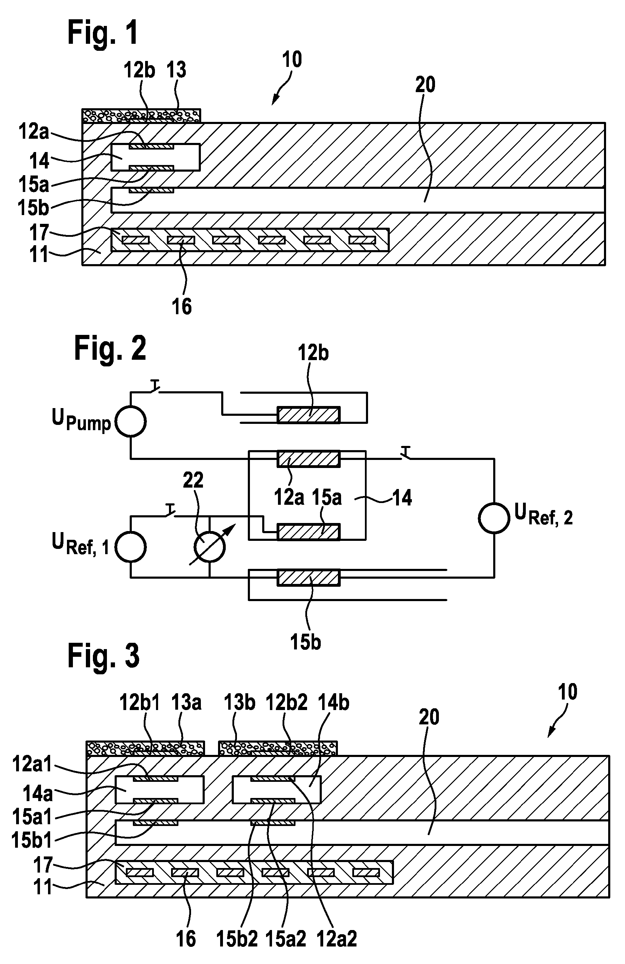

In Figur 1 ist exemplarisch ein Sensorelement dargestellt. Das Sensorelement 10 umfasst beispielsweise einen keramischen Sensorkörper 11, der vorzugsweise aus einer Mehrzahl von Festelektrolytschichten gebildet ist. Als Festelektrolytmaterial wird beispielsweise mit Yttriumoxid stabilisiertes oder teilstabilisiertes Zirkondioxid verwendet.

Die integrierte Form des planaren keramischen Körpers des Sensorelements 10 wird dabei durch Zusammenlaminieren von mit Funktionsschichten bedruckten keramischen Folien und anschließendem Sintern der laminierten Struktur hergestellt.

Das Sensorelement 10 weist eine gasdicht abgeschlossene innere Kammer 14 auf. Diese steht vorzugsweise weder mit einem zu bestimmenden Gasgemisch noch mit einer Referenzgasatmosphäre oder der Umgebungsluft in fluidleitendem Kontakt.

In der inneren Kammer 14 befindet sich eine erste innere Pumpelektrode 12a, die zusammen mit einer ersten äußeren Pumpelektrode 12b eine elektrochemische Pumpzelle bildet. Unter einer elektrochemischen Pumpzelle wird dabei eine Anordnung mindestens zweier Elektroden in Kontakt mit einer Festelektrolytschicht verstanden, wobei diese aufgrund einer anliegenden Pumpspannung dem elektrochemischen Transport von Sauerstoffionen durch die genannte Festelektrolytschicht hindurch dienen.

Die erste äußere Pumpelektrode 12b ist beispielsweise auf einer Großfläche des Sensorelementes 10 in Kontakt mit einem zu bestimmenden Gasgemisch positioniert. Zum Schutz der ersten äußeren Pumpelektrode 12b ist diese vorzugsweise mit einer porösen Schutzschicht 13 versehen. Die erste äußere Pumpelektrode 12b ist bspw. aus einem katalytisch aktiven Material wie beispielsweise Platin, Palladium, Iridium, Tantal oder deren Legierungen ausgeführt oder umfasst ein Mischpotentialelektrodenmaterial, das zumindest partiell katalytisch inaktiv ist, wie Gold, Silber, Kupfer oder Zink beziehungsweise deren Legierungen.

Weiterhin umfasst das Sensorelement 10 einen Referenzgaskanal 20, der mit einer Referenzgasatmosphäre in Kontakt steht, die beispielsweise durch die Luftatmosphäre gebildet sein kann. Im Referenzgaskanal 20 ist beispielsweise eine zweite äußere Pumpelektrode 15b positioniert, die zusammen mit einer in der inneren Kammer 14 positionierten zweiten inneren Pumpelektrode 15a eine zweite elektrochemische Pumpzelle bildet.

Um eine Beheizung des Sensorelements 10 auf eine Betriebstemperatur von beispielsweise 400 bis 1000°C zu ermöglichen, weist das Sensorelement 10 weiterhin ein Heizelement 16 auf, das beispielsweise von einer Schicht 17 eines keramischen, elektrisch isolierenden Materials, wie beispielsweise Aluminiumoxid, umgeben ist.

Die Beschaltung des in Figur 1 dargestellten Sensorelementes ist in einer beispielhaften Ausführungsform in Figur 2 abgebildet. Dabei wird das Sensorelement 10 beispielsweise in einer alternierenden Betriebsweise betrieben, bei der eine Akkumulationsphase und eine Initialisierungsphase unterschieden werden kann. Während der Akkumulationsphase wird mittels der ersten elektrochemischen Pumpzelle 12a, 12b bei Bestimmung reduzierbarer Gaskomponenten eines Gasgemischs wie Sauerstoff, Schwefel- oder Stickoxide) eine einer zu bestimmenden Gaskomponente äquivalente Menge an Sauerstoff in die erste innere Kammer 14 des Sensorelementes 10 verbracht. Bei Bestimmung oxidierbarer Gaskomponenten eines Gasgemischs wie Wasserstoff, Kohlenwasserstoffe oder Ammoniak wird dagegen Sauerstoff aus der ersten inneren Kammer 14 elektrochemisch entfernt.

Dazu wird beispielsweise an die Pumpelektroden 12a, 12b der ersten elektrochemischen Pumpzelle eine Pumpspannung U_{Pump} angelegt, die so bemessen ist, dass es an der Oberfläche der ersten äußeren Pumpelektrode 12b zu einer elektrochemischen Zersetzung der zu detektierenden Gaskomponente unter Freisetzung von Sauerstoff im Falle reduzierbarer Gaskomponenten bzw. unter Aufnahme von Sauerstoff im Falle oxidierbarer Gaskomponenten kommt.

Der freigesetzte Sauerstoff wird an der Elektrodenoberfläche der ersten äußeren Pumpelektrode 12b in Oxidionen überführt und durch den Festelektrolytkörper 11 des Sensorelements 10 zu ersten inneren Pumpelektrode 12a transportiert. Dort bildet sich elektrochemisch molekularer Sauerstoff zurück. Dieser akkumuliert in der inneren Kammer 14. Dabei kann gemäß einer ersten Verfahrensvariante die Akkumulationsphase für einen festen Zeitraum t vorgesehen sein.

In der sich anschließenden Messphase erfolgt dann ein elektrochemischer Transport von Sauerstoff aus der ersten inneren Kammer 14, beispielsweise in den Referenzgaskanal 20. Dies geschieht vorzugsweise mittels der zweiten elektrochemischen Pumpzelle 15a, 15b. Dabei wird in der inneren Kammer 14 akkumulierter molekularer Sauerstoff elektrochemisch an der Oberfläche der zweiten inneren Pumpelektrode 15a in Oxidionen überführt und durch den Festelektrolytkörper 11 des Sensorelementes 10 transportiert, wobei sich an der Elektrodenoberfläche der zweiten äußeren Pumpelektrode 15b molekularer Sauerstoff zurück bildet. Zu diesem Zweck wird an die zweite elektrochemische Pumpzelle 15a, 15b eine entsprechende Pumpspannung U_{Ref,1} angelegt.

Gleichzeitig erfolgt beispielsweise mittels eines Amperemeters 22 eine Bestimmung des zwischen den Elektroden der zweiten elektrochemischen Pumpzelle 15a, 15b fließenden Pumpstroms bzw. der transferierten Ladungsmenge. Diese stellen ein Maß für die Absolutmenge des in der inneren Kammer 14 akkumulierten molekularen Sauerstoffs dar und somit gleichzeitig ein Maß für die Absolutmenge an dazu korrespondierender zu bestimmender Gaskomponente. Eine alternative Messmethodik besteht in der Erfassung einer an den Elektroden der zweiten elektrochemischen Pumpzelle 15a, 15b anliegenden Nernstspannung. Dabei wird das Zeitintervall erfasst, das von Beginn der Akkumulierung an verstreicht, bis eine vorgegebene Nernstspannung an den Elektroden der zweiten elektrochemischen Pumpzelle erreicht ist. Dieses Zeitintervall korreliert ebenfalls mit einer vorgegebenen Absolutmenge der zu bestimmenden Gaskomponente.

Somit kann über den Zwischenschritt einer Akkumulationsphase der Absolutgehalt an zu detektierender Gaskomponente, die innerhalb der Akkumulationsphase in den sensitiven Bereich des Sensorelementes 10 gelangt, sehr genau bestimmt werden. Dies ermöglicht auch die Bestimmung von Gaskomponenten, die nur in sehr geringen Konzentrationen in einem zu bestimmenden Gasgemisch vorkommen.

Wird während der Messphase zusätzlich die erste innere Pumpelektrode 12a mit der zweiten äußeren Pumpelektrode 15b zu einer weiteren elektrochemischen Pumpzelle zusammengeschaltet, so kann beispielsweise während der Messphase durch Anlegen einer entsprechenden Pumpspannung U_{Ref, 2}, die beispielsweise der in der Messphase an die Elektroden der zweiten elektrochemischen Pumpzelle 15a, 15b angelegten Pumpspannung U_{Ref, 1} entspricht, ein zusätzlicher Transport von akkumuliertem Sauerstoff aus der ersten Kammer 14 in den Referenzgaskanal 20 bewirkt werden.

Dies beschleunigt die Entfernung des in der inneren Kammer 14 während der Akkumulationsphase akkumulierten molekularen Sauerstoffs. Die Beschleunigung dieses Prozesses beruht im Wesentlichen auf einer größeren Gesamtelektrodenoberfläche, die aus den Elektrodenoberflächen der ersten und zweiten inneren Pumpelektrode 12a, 15a gebildet wird. Gleichzeitig stellt sich in der inneren Kammer 14 ein im Wesentlichen in allen Bereichen vergleichbarer Sauerstoffpartialdruck ein. Eine kurze Dauer der Messphase ist wünschenswert, da während dieser das Sensorelement im Wesentlichen blind ist und keine weitere Veränderung der Konzentration an zu detektierender Gaskomponente in dem zu bestimmenden Gasgemisch wahrnimmt. Eine kurze Messphase verkürzt somit in wünschenswerter Weise den aus Akkumulationsphase und Messphase bestehenden Messzyklus ohne Verlust an Messgenauigkeit.

Die vorgeschlagene Beschaltung unter Bildung einer weiteren elektrochemischen Pumpzelle 12a, 15b ermöglicht es jedoch auch, in unterschiedlichen Teilbereichen der inneren Kammer 14 unterschiedliche Sauerstoffpartialdrucke einzustellen. Wird U_{Ref, 2} abweichend zu U_{Ref, 1} gewählt, entsteht innerhalb der inneren Kammer 14 ein Sauerstoffkonzentrationsgradient. Durch diese definiert inhomogene Verteilung des Sauerstoffgehalts innerhalb der inneren Kammer 14 können einzelne Messeigenschaften des Sensorelements 10 unabhängig voneinander ausgeprägt werden.

Auf diese Weise kann beispielsweise Einfluss auf die Korrelation zwischen der ersten inneren Pumpelektrode 12a und dem mittels der zweiten inneren Pumpelektrode bestimmten Zustand der inneren Kammer 14 genommen werden, indem die Gaszusammensetzung im Bereich der ersten bzw. zweiten inneren Pumpeleektroden 12a, 15a gezielt unterschiedlich gewählt werden und somit das Verhältnis der im Bereich der ersten bzw. zweiten inneren Pumpelektroden 12a, 15a akkumulierten Gasmenge und dem Kammervolumen der inneren Kammer 14 beeinflusst werden kann. Weiterhin ermöglicht diese Beschaltung eine Beeinflussung des während der Akkumulierungsphase ablaufenden Pumpprozesses zwischen den Elektroden der ersten elektrochemischen Pumpzelle 12a, 12b, insbeondere bereits im Ausgangszustand.

Durch eine geeignete Wahl der Pumpspannung U_{Ref, 1} kann der Sauerstoffpartialdruck vorgewählt werden, der als Startpunkt für eine nachfolgende Akkumulationsphase innerhalb der inneren Kammer 14 herrschen soll. Auf diese Weise wird Einfluss genommen auf den Zeitraum, der benötigt wird, um eine bestimmte Menge an Sauerstoff innerhalb der inneren Kammer 14 zu akkumulieren.

Weiterhin kann während der Initialisierungsphase durch Wahl einer geeigneten Pumpspannung U_{Ref, 2} auf das Verhalten der ersten elektrochemischen Pumpzelle 12a, 12b Einfluss genommen werden.

Während der Initialisierungsphase kann die an die weitere elektrochemische Pumpzelle 12a, 15b angelegte Pumpspannung U_{Ref, 2} je nach Betriebsweise unterschiedlich gewählt werden. So ist es beispielsweise möglich, während der Initialisierungsphase U_{Ref, 2} konstant zu halten. Auf diese Weise kann Zustand und Eigenschaften bzw. der Ausgangszustand der ersten elektrochemischen Pumpzelle 12a, 12b gezielt beeinflusst werden.

Gemäß einer weiteren Variante wird die an der weiteren elektrochemischen Pumpzelle 12a, 15b anliegende Pumpspannung U_{Ref, 2} während der Initialisierungsphase so gewählt, dass die an der ersten elektrochemischen Pumpzelle 12a, 12b anliegende Pumpspannung U_{Pump} einen definierten Wert während der Initialisierungsphase annimmt, der der bspw. Einem Ausgangswert einer auf die Initialisierungsphase folgenden Akkumulierungsphase entspricht. Der Vorteil dieser Betriebsweise besteht darin, dass bspw. die Akkumulierung unabhängig von der Zusammensetzung des zu bestimmenden Gasgemischs mit vergleichbaren Ausgangsbedingungen gestartet werden kann.

Eine weitere, dritte Variante besteht darin, dass die an der weiteren elektrochemischen Pumpzelle 12a, 15b anliegende Pumpspannung U_{Ref, 2} bspw. während der Initialisierungsphase so gewählt wird, dass sich zwischen der ersten inneren ersten Pumpelektrode 12a und einer weiteren, nicht der ersten bzw. zweiten elektrochemischen Pumpzelle 12a, 12b bzw. 15a, 15b zuzuordnenden Elektrode eine insbesondere konstante Potentialdifferenz einstellt. Der Vorteil dieser Betriebsweise besteht darin, dass der Regelungszusammenhang nicht durch das von der zu bestimmenden Gaskomponente abhängige Potenzial der ersten äußeren Pumpelektrode 12b vorgegeben ist sondern durch das bspw. sauerstoffabhängige Potenzial einer weiteren Elektrode.

In Figur 3 ist eine Variante des Sensorelements gemäß der in Figur 1 dargestellten ersten Ausführungsform abgebildet. Dabei bezeichnen gleiche Bezugszeichen gleiche Bauteilkomponenten wie in Figur 1 und 2.

Das in Figur 3 dargestellte Sensorelement umfasst eine erste und eine zweite innere Kammer 14a, 14b, die beispielsweise in derselben Schichtebene des aus keramischen Schichten gebildeten keramischen Körpers 11 des Sensorelementes 10 positioniert sind. In diesen ist jeweils eine erste innere Pumpelektrode 12a1, 12a2 positioniert sowie jeweils eine zweite innere Pumpelektrode 15a1, 15a2. Dabei bilden die ersten inneren Pumpelektroden 12a1, 12a2 zusammen mit jeweils auf der Großfläche des Sensorelements aufgebrachten äußeren Pumpelektroden 12b1, 12b2 erste elektrochemische Pumpzellen. Dabei können die äußeren Pumpelektroden 12b1, 12b2 beispielsweise durch poröse Schutzschichten 13a, 13b vor den abrasiven Einflüssen des zu detektierenden Gasgemischs geschützt werden.

Weiterhin bilden die inneren Pumpelektroden 15a1, 15b2 jeweils zusammen mit äußeren Pumpelektroden 15b1, 15b2 zweite elektrochemische Pumpzellen. Das in Figur 3 dargestellte Sensorelement 10 umfasst somit zwei im Wesentlichen symmetrisch ausgebildete sensitive Bereiche, die der Bestimmung von Gaskomponenten in dem zu detektierenden Gasgemisch dienen.

Werden die ersten äußeren Pumpelektroden 12b1, 12b2 aus unterschiedlichen Elektrodenmaterialen ausgeführt, so können die zugehörigen ersten elektrochemischen Pumpzellen selektiv zur Bestimmung ausgewählter Gaskomponenten des Gasgemischs herangezogen werden. Wird beispielsweise die eine erste äußere Pumpelektrode 12b1 als katalytisch inaktive Elektrode bzw. als Mischpotentialelektrode ausgeführt, die andere erste äußere Pumpelektrode 12b2 jedoch als katalytisch aktive Elektrode beispielsweise aus Platin, so wird an der einen ersten elektrochemischen Pumpzelle 12a1, 12b1 nahezu ausschließlich der freie Sauerstoff des im zu detektierenden Gasgemischs elektrochemisch in die erste innere Kammer 14a transportiert. An den Elektroden der anderen ersten elektrochemischen Pumpzelle 12a2, 12b2 wird dagegen die Summe aus im zu detektierenden Gasgemisch enthaltenem freiem Sauerstoff und dem aus der Zersetzung der zu detektierenden Gaskomponente resultierendem Sauerstoff transportiert.

Wird anschließend die Differenz der während der Akkumulationsphase in den ersten inneren Kammern 14a, 14b akkumulierten Mengen an Sauerstoff bestimmt, so ist die Differenz ein Maß für den Gehalt an zu detektierender Gaskomponente im Gasgemisch.

Um zu Beginn der Akkumulationsphase in beiden inneren Kammern 14a, 14b einen im Wesentlichen identischen Sauerstoffgehalt zu erhalten, können die ersten inneren Pumpelektroden 12a1, 12a2 zu einer weiteren elektrochemischen Pumpzelle zusammen geschaltet werden, wodurch ein Konzentrationsausgleich an Sauerstoff in den beiden inneren Kammern 14a, 14b erreicht wird. Während einer Messphase kann der jeweilige Gehalt an akkumuliertem Sauerstoff in den jeweiligen inneren Kammern 14a, 14b mittels der jeweils zweiten elektrochemischen Pumpzelle 15a1, 15b1 bzw. 15a2, 15b2 in bereits beschriebener Weise bestimmt werden.

Eine weitere Möglichkeit besteht darin, die ersten inneren Pumpelektroden 12a1, 12a2 beziehungsweise die zweiten inneren Pumpelektroden 15a1, 15a2 jeweils zu einer elektrochemischen Pumpzelle zusammenzuschließen und die Konzentrationsdifferenz zwischen beiden inneren Kammern 14a, 14b zur Bestimmung des Sauerstoffgehalts heran zu ziehen.

Gemäß einer dritten Variante werden die ersten inneren Pumpelektroden 15a1, 15a2 beziehungsweise die zweiten inneren Pumpelektroden 15b1, 15b2 jeweils zu elektrochemischen Nernstzellen zusammengeschaltet und auf Basis der eintretenden Potentialdifferenzen jeweils eine Konzentrationsbestimmung des Sauerstoffs in den ersten inneren Kammern 14a, 14b durchgeführt. Da in der ersten inneren Kammer 14a Sauerstoff akkumuliert wird, dessen Menge im Wesentlichen der im Gasgemisch enthaltenen Menge an freien Sauerstoff entspricht, und in der zweiten inneren Kammer 14b eine Sauerstoffmenge, die der Summe aus im Gasgemisch enthaltenem freien Sauerstoff sowie dem aus der Zersetzung der zu detektierenden Gaskomponente resultierendem Sauerstoff entspricht, führt die Differenzbestimmung der Sauerstoffmengen direkt zu einem Messsignal, das im Wesentlichen der Menge an zu detektierender Gaskomponente entspricht.

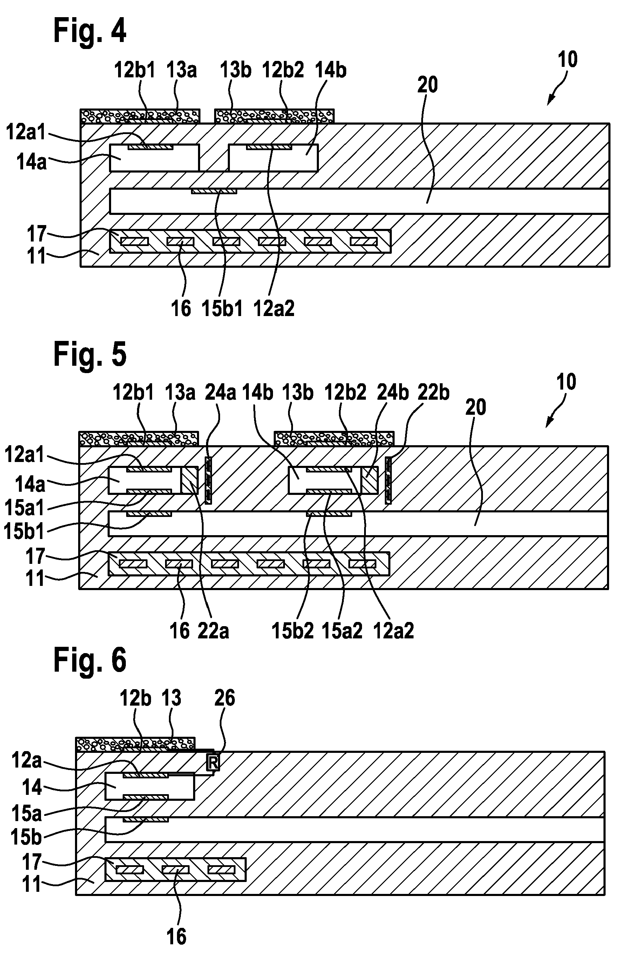

In Figur 4 ist eine weitere Variante des in Figur 1 dargestellten Sensorelements abgebildet. Dabei bezeichnen weiterhin gleiche Bezugszeichen gleiche Bauteilkomponenten wie in den Figuren 1 bis 3.

Da die Aufbringung von Elektroden innerhalb keramischer Sensorelemente einen gewissen Kostenfaktor darstellt, zeigt Figur 4 eine Variante des Sensorelements gemäß der ersten Ausführungsform, dessen Aufbau ohne Funktionsverlust wesentlich vereinfacht ist. Während der Aufbau des keramischen Körpers 11 des Sensorelements 10 im Wesentlichen dem in Figur 3 abgebildeten entspricht, ist jedoch die Zahl der benötigten Elektroden wesentlich reduziert.

So wird beispielsweise bei dem in Figur 4 dargestellten Sensorelement die eine der zweiten elektrochemischen Pumpzellen durch die eine erste Pumpelektrode 12a1 zusammen mit der zweiten äußeren Pumpelektrode 15b1 gebildet und die andere zweite elektrochemische Pumpzelle durch die erste innere Pumpelektrode 12a2 mit der gemeinsamen zweiten äußeren Elektrode 15b1. Aufgrund dieses Sensoraufbaus kann auf die zweiten inneren Pumpelektroden 15a1, 15a2 sowie auf eine der zweiten äußeren Pumpelektroden 15b2 verzichtet werden. Dies vereinfacht den Aufbau des Sensorelements wesentlich.

Eine weitere Vereinfachungsmöglichkeit besteht darin, dass bei dem in Figur 3 dargestellten Sensorelement zur Vereinfachung der Kontaktierung jeweils die Anschlüsse der einen inneren Pumpelektroden 12a1, 15a1 beziehungsweise der anderen inneren Pumpelektroden 12a2, 15a2 innerhalb des Sensorelementes kurz geschlossen werden. Gleiches kann für die zweiten äußeren Pumpelektroden 15b1, 15b2 gelten. Das Kurzschließen dieser Elektroden kann entweder innerhalb des Sensorelements oder innerhalb eines das Sensorelement kontaktierenden Steckers, innerhalb einer den Stecker beispielsweise mit einem Steuergerät verbindenden Zuleitung oder innerhalb eines Steuergeräts erfolgen. Weiterhin kann die Funktion der Elektroden 15b1 und 15b2 bzw. 12a1 und 15a1 bzw. 12a2 und 15a2 jeweils in einer Elektrode zusammengefasst werden.

In Figur 5 ist eine dritte Variante des in Figur 1 dargestellten Sensorelements abgebildet. Dabei bezeichnen weiterhin gleiche Bezugszeichen gleiche Bauteilkomponenten wie in den Figuren 1 bis 4.

Das in Figur 5 dargestellte Sensorelement gemäß einer dritten Ausführungsvariante des Sensorelements entspricht in weiten Teilen dem in Figur 3 dargestellten Sensorelement. Zusätzlich ist jedoch vorzugsweise in mindestens einer der inneren Kammern 14a, 14b eine Schicht aus einem sauerstoffabsorbierenden beziehungsweise sauerstoffspeichernden, bspw. keramischen Material vorgesehen. Diese Schicht eines sauerstoffsspeichernden Materials 22a, 22b ist beispielsweise aus einem Sauerstoffspeichermaterial ausgeführt, wie es beispielsweise Verwendung in NOx-Speicherkatalysatoren findet. Als sauerstoffspeicherndes Material sind bspw. zeolithhaltige Keramiken, Perovskite oder Edelmetalloxide wie Palladiumoxid vorgesehen.

Der Vorteil dieser Anordnung besteht darin, dass es in der Akkumulationsphase in den inneren Kammern 14a, 14b nicht zu einem Überdruck an eingepumptem Sauerstoff kommt, da mit zunehmendem Sauerstoffgehalt eine zunehmende Speicherung des eingepumpten Sauerstoffs innerhalb des sauerstoffspeichernden Materials der Schichten 22a, 22b erfolgt. Um während der sich anschließenden Messphase den Gesamtgehalt des in den inneren Kammern 14a, 14b enthaltenen und in den Schichten 22a, 22b gespeicherten Sauerstoffs bestimmen zu können, weist das Sensorelement 10 beispielsweise zusätzlich weitere Heizelemente 24a, 24b auf, mit deren Hilfe während der Messphase die Schichten 22a, 22b des sauerstoffspeichernden Materials separat erwärmt werden können und es somit zu einer Desorption des gespeicherten Sauerstoffs kommt.

Je nach Wahl des sauerstoffspeichernden Materials kann dabei die Temperatur, die mittels der Heizelemente 24a, 24b gewährleistet wird, separat und spezifisch gewählt und eingestellt werden. Dabei sind die Heizelemente 24a, 24b vorzugsweise in einer vergleichbaren Form ausgeführt wie das Heizelement 16 und befinden sich vorzugsweise im Bereich der Schichten 22a, 22b eines sauerstoffspeichernden Materials.

In Figur 6 ist eine vierte Variante des in Figur 1 dargestellten Sensorelements abgebildet. Dabei bezeichnen weiterhin gleiche Bezugszeichen gleiche Bauteilkomponenten wie in den Figuren 1 bis 5.

Bei dem in Figur 6 dargestellten Sensorelement ist die erste elektrochemische Pumpzelle 12a, 12b als sogenannte passive oder autonome Pumpzelle ausgeführt. Die Funktionsweise einer autonomen elektrochemischen Pumpzelle beruht darauf, dass diese nicht beispielsweise über einen externen Anschluss mit einer Pumpspannung beaufschlagt wird, sondern dass die Elektroden dieser elektrochemischen Pumpzelle beispielsweise über einen Ohmschen Widerstand kurz geschlossen werden und sich der an den Pumpelektroden der autonomen Pumpzelle einstellende Pumpvorgang allein auf Basis von Konzentrationsunterschieden der an den einzelnen Pumpelektroden der elektrochemischen Pumpzelle anliegenden Gasgemische ergibt.

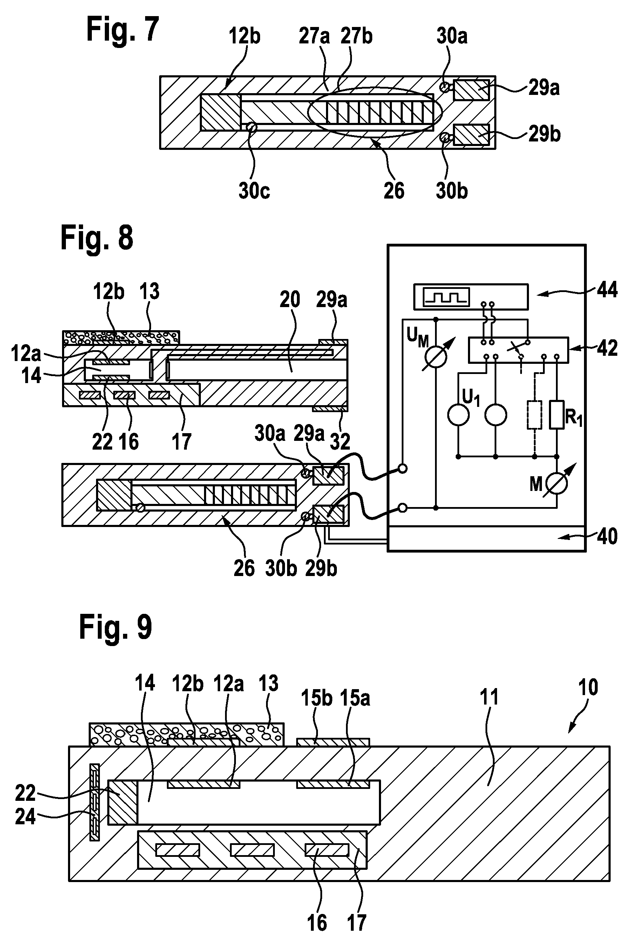

Im vorliegenden Ausführungsbeispiel wird daher die erste innere Pumpelektrode 12a, die der Gasatmosphäre in der gasdicht abgeschlossenen inneren Kammer 14 ausgesetzt ist, über einen Ohmschen Widerstand 26 mit der ersten äußeren Pumpelektrode 12b, die dem bestimmenden Gasgemisch ausgesetzt ist, kurzgeschlossen. Aufgrund der Sauerstoffpartialdruckdifferenz zwischen dem zu bestimmenden Gasgemisch und der in der ersten inneren Kammer 14 herrschenden Gasatmosphäre tritt ein elektrochemischer Pumpprozess von Sauerstoff vorzugsweise in Richtung der inneren Kammer 14 auf. Dabei ist der Ohmsche Widerstand 26 entweder in den keramischen Körper 11 integriert oder, wie in Figur 7 abgebildet, auf einer Großfläche des Sensorelementes positioniert; vorzugsweise auf derselben Großfläche auf der sich auch die erste äußere Pumpelektrode 12b befindet.

Die letzt genannte Ausführungsform gestattet es, den Ohmschen Widerstand 26 in Form eines trimmbaren Widerstandes auszuführen. Dabei ist der Ohmsche Widerstand 26 in Form zweier Widerstandleiterbahnen ausgeführt, die durch eine Mehrzahl von elektrisch leitenden Überbrückungen 27a, 27b .... verbrückt ist. Werden die Überbrückungen 27a, 27b ... in geeigneter Weise durchtrennt, so dass nur eine der Überbrückungen 27a, 27b, ... zu einem Kurzschluss der den Ohmschen Widerstand 26 bildenden Widerstandsbahnen führt, so kann die Länge der resultierenden Gesamtwiderstandsbahn geeignet gewählt und somit der elektrische Widerstand des Ohmschen Widerstands 26 eingestellt werden.

In Figur 7 sind weiterhin Kontaktflächen 29a, 29b zur Kontaktierung von Elektroden des Sensorelementes abgebildet, die über Durchkontaktierungen 30a, 30b und nicht dargestellte Zuleitungsbahnen zu den entsprechenden Sensorelektroden geführt sind. Die Kontaktierung der ersten inneren Pumpelektrode 12a mit dem Ohmschen Widerstand 26 erfolgt über eine weitere Durchkontaktierung 30c.

Eine schematische Darstellung der Beschaltung des in den Figuren 6 und 7 dargestellten Sensorelements ist in Figur 8 abgebildet. Dabei bezeichnen weiterhin gleiche Bezugszeichen gleiche Bauteilkomponenten wie in den Figuren 1 bis 7.

Dabei ist in Figur 8 links oben eine Schnittdarstellung eines Sensorelements abgebildet, das einer Variante des in Figur 6 dargestellten Sensorelements entspricht. Bei dem in Figur 8 dargestellten Sensorelement ist der Referenzgaskanal 20 nicht in einer separaten Schichtebene des keramischen Sensorkörpers 11 angeordnet, sondern vorzugsweise in derselben Schichtebene wie die innere Kammer 14. Dies vereinfacht den Aufbau des keramischen Körpers 11, da eine oder mehrere keramische Schichten weggelassen werden können.

Die Pumpelektroden der zweiten elektrochemischen Pumpzelle 15a, 15b sind dabei vorzugsweise auf die Wandungen des die innere Kammer 14 vom Referenzgaskanal 20 trennenden keramischen Zwischenwand aufgebracht. Weiterhin ist in dieser Schnittdarstellung eine Kontaktierung 32 zur Kontaktierung des Heizelementes 16 dargestellt. Darüber hinaus ist in der inneren Kammer 14 eine Schicht eines Sauerstoffs absorbierenden Materials 22 positioniert.

Weiterhin zeigt Figur 8 links unten eine Aufsicht auf das Sensorelement gemäß der in Figur 8 dargestellten Variante sowie auf der rechten Seite eine zugehörige Betriebs- und Auswerteschaltung. Diese umfasst neben einer Heizerregelung 40 eine Steuerungseinheit 42 zur zeit- beziehungsweise strom-, ladungs- oder spannungsgesteuerten Umschaltung zwischen verschiedenen Messbeziehungsweise Akkumulationsmodi, eine Spannungsquelle Uᵢ, eine Stromquelle Iᵢ, ein Instrument zur Spannungsmessung Um und ein Instrument zur Strommessung Iₘ sowie vorzugsweise Belastungswiderstände RI. Weiterhin ist eine Auswerteschaltung 44 vorgesehen.

In Figur 9 ist ein weiteres Sensorelement abgebildet. Es bezeichnen dabei gleiche Bezugszeichen weiterhin gleiche Bauteilkomponenten wie in den Figuren 1 bis 8.

Das in Figur 9 dargestellte Sensorelement weist eine vereinfachte Bauform auf, da auf die Einarbeitung eines separaten Referenzgaskanals verzichtet wird. In diesem Fall ist die äußere Pumpelektrode der zweiten elektrochemischen Pumpzelle 15b nicht einer Luftreferenzatmosphäre ausgesetzt, sondern vorzugsweise dem zu detektierenden Gasgemisch. Zu diesem Zweck ist die zweite äußere Pumpelektrode 12b beispielsweise auf derselben Großfläche des Sensorelementes 10 angeordnet, auf dem sich auch die erste äußere Pumpelektrode 12b befindet.

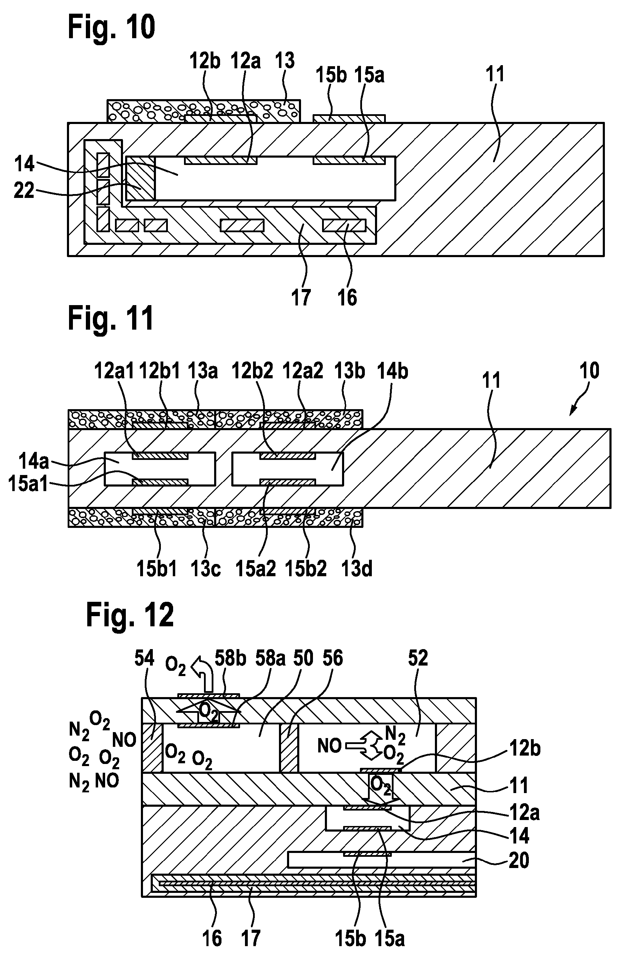

Eine Variante des in Figur 9 dargestellten Sensorelements ist in Figur 10 abgebildet. Bei diesem ist das Heizelement 16 in einer asymmetrischen Variante ausgeführt. Um eine intensive Beheizung der in der inneren Kammer 14 vorgesehenen Schicht 22 aus einem sauerstoffspeichernden Material zu ermöglichen, ist in diesem Bereich das Heizelement 16 mit einer höheren Heizleistung ausgestattet. Dies kann entweder durch eine höhere räumliche Dichte an Widerstandsleiterbahnen pro Flächeneinheit erreicht werden oder es wird eine Widerstandsleiterbahn mit einem höheren elektrischen Widerstand vorgesehen. Auf diese Weise kann die zu einer Desorption in der Messphase nötige Erwärmung der sauerstoffspeichernden Schicht 22 gewährleistet werden.

In Figur 11 ist ein weiteres Sensorelement abgebildet. Es bezeichnen gleiche Bezugszeichen weiterhin gleiche Bauteilkomponenten wie in den Figuren 1 bis 10.

Das in Figur 11 abgebildete Sensorelement zeigt ebenfalls eine vereinfachte Bauform, da auf die Einarbeitung eines Referenzgaskanals 20 in den keramischen Körpers 11 des Sensorelements verzichtet wird. Das Sensorelement 10 umfasst im Wesentlichen vier weitgehend identische bzw. symmetrisch ausgeführte elektrochemische Pumpzellen 12a1, 12b1; 12a2, 12b2; 15a1, 15a2 sowie 15a2, 15b2. Dabei sind vorzugsweise jeweils die äußeren Pumpelektroden 12b1, 12b2, 15b1 und 15b2 durch poröse Schutzschichten 13a, 13b, 13c, 13d vor abrasiven Einflüssen des zu detektierenden Gasgemischs geschützt.

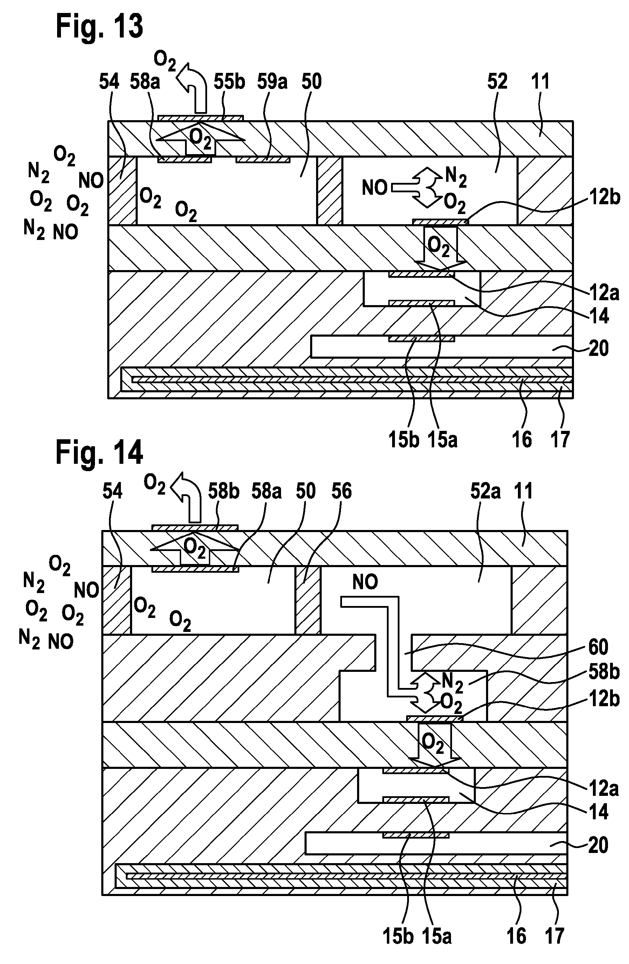

In Figur 12 ist ein Sensorelement gemäß einer Ausführungsform der vorliegenden Erfindung dargestellt. Auch hier bezeichnen gleiche Bezugszeichen gleiche Bauteilkomponenten wie in den Figuren 1 bis 11. Weitere Varianten dieser Ausführungsform sind den Figuren 13 bis 17 zu entnehmen.

Im Wesentlichen beruht die Ausführung des in Figur 12 dargestellten Sensorelementes darauf, dass das zu detektierende Gasgemisch, bevor es in Kontakt mit elektrochemischen Pumpzellen des Sensorelementes tritt, die der Akkumulierung von Sauerstoff in einer separaten gasdicht abgeschlossen inneren Kammer 14 dienen, in Strömungsrichtung vorgeschaltet vorzugsweise innerhalb des Sensorelements 10 einem Prozess zur Verringerung des Gehaltes an freiem Sauerstoff im zu detektierenden Gasgemisch unterzogen wird.

Dazu weist das Sensorelement 10 gemäß Figur 12 einen ersten Messgasraum 50 auf sowie ein zweiten Messgasraum 52. Dabei ist der erste Messgasraum 50 von einem das Sensorelement umgebenden zu detektierenden Gasgemisch über eine erste Diffusionsbarriere 54 separiert, die beispielsweise aus einem porösen keramischen Material ausgeführt ist, und der zweite Messgasraum 52 vom ersten Messgasraum 50 vorzugsweise durch eine zweite Diffusionsbarriere 56, die ebenfalls aus einem keramischen porösen Material ausgeführt sein kann.

Innerhalb des ersten Messgasraumes 50 befindet sich vorzugsweise eine vierte innere Pumpelektrode 58a, die zusammen mit einer vorzugsweise auf der Großfläche des Sensorelements angebrachten vierten äußeren Pumpelektrode 58b eine elektrochemische Pumpzelle bildet. Die vierte elektrochemische Pumpelektrode 58a, 58b dient der Entfernung von freiem Sauerstoff aus dem in den ersten Messgasraum 50 eindiffundierenden zu detektierenden Gasgemisch, weitgehend ohne dass die zu detektierende Gaskomponente des zu bestimmenden Gasgemischs dabei zersetzt wird.

Zu diesem Zweck ist die vierte innere Pumpelektrode 58a beispielsweise aus einem selektiv katalytisch aktiven Material ausgeführt, das insbesondere freien Sauerstoff elektrochemisch reduziert, jedoch weitere oxidierbare beziehungsweise reduzierbare Bestandteile des Gasgemischs im Wesentlichen unverändert lässt.

Das auf diese Weise von freiem Sauerstoff zumindest partiell befreite zu detektierende Gasgemisch gelangt über die zweite Diffusionsbarriere 56 in den zweiten inneren Gasraum 52, in dem die erste äußere Pumpelektrode 12b platziert ist. Diese bewirkt zusammen mit der ersten inneren Pumpelektrode 12a einen elektrochemischen Transportvorgang von aus der Dissoziation der zu detektierenden Gaskomponente resultierendem Sauerstoff in die innere Kammer 14. Die Betriebsweise des in Figur 12 dargestellten Sensorelements basierend auf Akkumulations- und Messphase verläuft nachfolgend im Wesentlichen analog zu der für die vorangegangenen Ausführungsbeispiele beschriebenen.

Gemäß der in Figur 13 dargestellten Variante des in Figur 12 abgebildeten Sensorelements ist innerhalb des Messgasraums 50 neben der vierten inneren Pumpelektrode 58a eine fünfte innere Pumpelektrode 59a platziert. Dabei bildet die vierte innere Pumpelektrode 58a zusammen mit der vierten äußere Pumpelektrode 58b eine vierte elektrochemische Pumpzelle und die fünfte innere Pumpelektrode 59a zusammen mit der vierten äußeren Pumpelektrode 58b ein fünfte elektrochemische Pumpzelle.

Im Betrieb wird das an der vierten beziehungsweise fünften elektrochemischen Pumpzelle 58a, 58b bzw. 59a, 58b anliegende Potential so gewählt, dass an der inneren Pumpelektrode 58a der vierten elektrochemischen Pumpzelle 58a, 58b ein Großteil des freien im Gasgemisch verfügbaren Sauerstoffs elektrochemisch entfernt wird und an der fünften inneren Pumpelektrode 59a aufgrund deren niedrigeren Potentials ein Restgehalt an freiem verfügbarem Sauerstoff. In beiden Fällen wird vermieden, dass die zu detektierende Gaskomponente innerhalb des Gasgemischs an den inneren Pumpelektroden 58a, 59a elektrochemisch zersetzt wird.

In Figur 14 ist eine weitere Variante des in Figur 12 dargestellten Sensorelements gezeigt. Bei dieser ist der zweite Messgasraum 52 in ein erstes Kompartiment 52a und ein zweites, sich vorzugsweise in einer anderen Schichtebene befindendes Kompartiment 52b aufgegliedert. Zwischen den Kompartimenten 52a, 52b befindet sich eine weitere Diffusionsbarriere, beispielsweise in Form einer Bohrung 60 durch eine keramische Schicht des Sensorkörpers 11. Der Vorteil dieser Anordnung besteht in einer räumlichen Trennung der elektrochemischen Zellen und aufgrund der Anordnung in unterschiedlichen Schichtebenen des Sensorelements einer wirksamen Einschränkung einer möglichen gegenseitigen Kontamination der zugehörigen Elektroden.

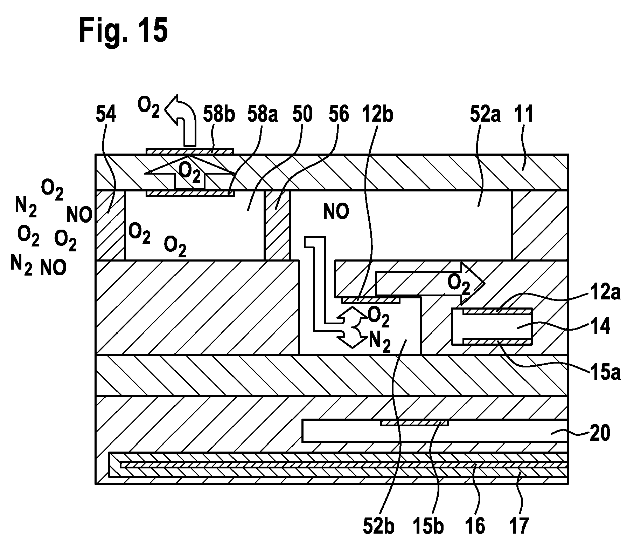

In Figur 15 ist eine dritte Variante des in Figur 12 dargestellten Sensorelementes abgebildet. Die abgebildete Variante entspricht weitgehend der in Figur 14, nur befindet sich das zweite Kompartiment 52b im Wesentlichen in derselben keramischen Schichtebene wie die innere Kammer 14. Dies führt zu einem vereinfachten Aufbau im Vergleich zu dem in Figur 14 abgebildeten.

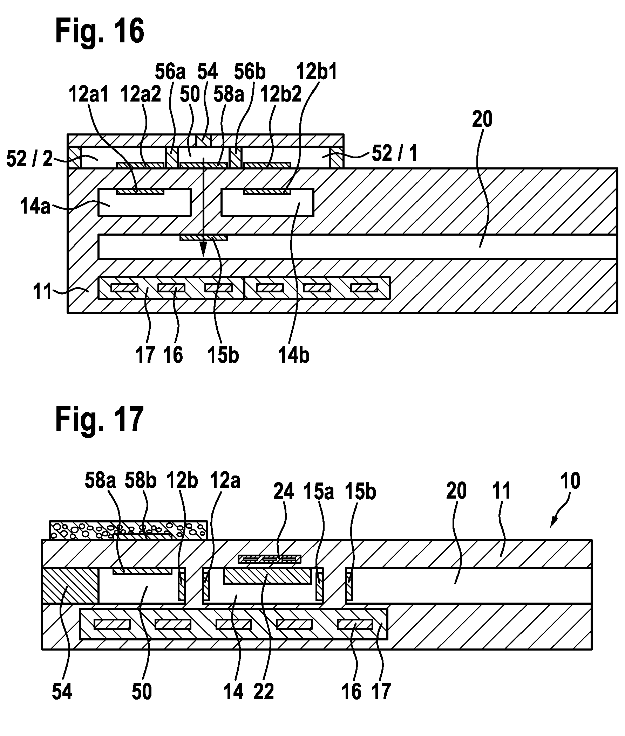

Figur 16 zeigt eine vierte Variante des in Figur 12 dargestellten Sensorelementes. Dieses stellt von seiner Ausführungsform eine Mischung der in Figur 12 und der in Figur 14 dargestellten Variante dar.

Das in Figur 16 dargestellte Sensorelement umfasst einen ersten Messgasraum 50, der über zwei Gasdiffusionsbarrieren 56a, 56b mit zwei zweiten Messgasräumen 52/1 und 52/2 in fluidleitendem Kontakt steht. Der erste Messgasraum 50 steht beispielsweise über eine in der oberen Begrenzungsfläche des ersten Messgasraums 50 angebrachte Bohrung, die mit einer aus einem porösen keramischen Material ausgeführten Diffusionsbarriere 54 ausgefüllt ist, mit dem zu detektierenden Gasgemisch in Verbindung. Dabei bildet die vierte innere Pumpelektrode 58a vorzugsweise mit der im Referenzgaskanal 20 angeordneten zweiten äußeren Pumpelektrode 15b eine elektrochemische Pumpzelle zur Entfernung des in den ersten Messgasraum 50 eindiffundierenden freien molekularen Sauerstoffs. Diese Transportrichtung ist in Figur 16 durch einen Pfeil verdeutlicht.

Das von molekularem Sauerstoff weitgehend befreite Gasgemisch diffundiert dann durch die zweiten Diffusionsbarrieren 56a, 56b in die zweiten inneren Gasräume 52/1 bzw. 52/2. Die Akkumulierung einer der zu detektierenden Gaskomponente äquivalenten Menge an Sauerstoff innerhalb der inneren Gasräume 14a, 14b verläuft in analoger Weise wie bereits beschrieben.

In Figur 17 ist eine fünfte Variante des in Figur 12 dargestellten Sensorelementes abgebildet. Dieses Sensorelement zeigt einen besonders einfachen Aufbau, da alle inneren Gasräume des Sensorelements im Wesentlichen in der gleichen Schichtebene des keramischen Körpers 11 angeordnet sind. Auf diese Weise kann ein Kosten sparendes Sensorelement erzielt werden. Dabei ist die innere Kammer 14 beispielsweise mittels einer keramischen Begrenzungsfläche vom ersten Messgasraum 50 abgetrennt, wobei sich auf dieser Begrenzungsfläche vorzugsweise die Elektroden der ersten elektrochemischen Pumpzelle 12a, 12b befinden.

Die innere Kammer 14 ist weiterhin durch eine zweite keramische Begrenzungsfläche vom Referenzgaskanal 20 abgetrennt, wobei sich auf dieser zweiten keramischen Begrenzungsfläche vorzugsweise die Elektroden der zweiten elektrochemischen Pumpzelle 15a, 15b befinden. Die Funktionsweise dieser Variante beruht im Wesentlichen auf der bereits vorbeschriebenen.

Die beschriebenen Sensorelemente dienen insbesondere dem Nachweis beziehungsweise der Konzentrationsbestimmung von Gaskomponenten eines Gasgemischs, die reduzierbar sind und somit beispielsweise Sauerstoff bei ihrer elektrochemischen Zersetzung freisetzen. Dies sind beispielsweise Stick- oder Schwefeloxide bzw. Kohlendioxid.

Analog lassen sich die beschriebenen Sensorelemente jedoch auch zum Nachweis oxidierbarer Gaskomponenten wie Ammoniak, Kohlenwassersserstoffe, Kohlenmonoxid oder Wasserstoff heranziehen. In diesem Fall wird in der Akkumulationsphase eine inverse Pumpspannung an die Elektroden der ersten elektrochemischen Pumpzelle 12a, 12a1, 12a2, 12b, 12b1, 12b2 angelegt, so dass Sauerstoff aus der inneren Kammer 14, 14a, 14b zur Oxidation der oxidierbaren zu detektierenden Gaskomponenten heraustransportiert wird. Das dabei in der inneren Kammer 14, 14a, 14b auftretende Sauerstoffdefizit wird nachfolgend als ein der Konzentration an zu detektierender Gaskomponente proportionales Signal herangezogen.

Die beschriebenen Sensorelemente dienen der Bestimmung von Gaskomponenten beispielsweise in Abgasen von Verbrennungsmotoren, Kraftwerken oder Hausfeuerungsanlagen. Sie können beispielsweise in Abgastrakten von Verbrennungsmotoren zur Kontrolle der Funktionsweise von Dreiwegekatalysatoren, Stickoxidspeicherkatalysatoren oder Dieselpartikelfiltern herangezogen werden.

## Patentansprüche

1. Sensorelement eines Gassensors zur Bestimmung von Gaskomponenten in Gasgemischen, insbesondere in Abgasen von Verbrennungsmotoren, umfassend mindestens eine elektrochemische Messzelle, die aus einem keramischen Substrat und darauf aufgebrachten Elektroden gebildet ist, wobei das Sensorelement mindestens einen gasdicht abgeschlossenen inneren Raum (14, 14a, 14b) umfasst, in dem mindestens eine erste innere Elektrode (12a, 15a, 12a1, 12a2, 15a1, 15a2) positioniert ist, die mit einer zweiten und einer weiteren Elektrode (12b, 12b1, 12b2, 15b, 15b1, 15b2) des Sensorelements je eine elektrochemische Zelle bildet, wobei eine der elektrochemischen Zellen eine elektrochemische Pumpzelle ist, und wobei die zweite und / oder die weitere Elektrode (12b, 12b1, 12b2, 15b, 15b1, 15b2) dem Gasgemisch ausgesetzt ist und wobei ein mit dem Gasgemisch in fluidleitendem Kontakt stehender weiterer innerer Gasraum (50) vorgesehen ist, in dem eine Elektrode (58a, 59a) des Sensorelements vorgesehen ist, die selektiv im Gasgemisch enthaltenen molekularen Sauerstoff katalytisch zersetzt.

2. Sensorelement nach Anspruch 1, **dadurch gekennzeichnet, dass** beide elektrochemischen Zellen elektrochemische Pumpzellen sind, an deren Elektroden (12a, 12a1, 12a2, 12b, 12b1, 12b2, 15a, 15a1, 15a2, 15b, 15b1, 15b2) zumindest phasenweise eine Pumpspannung anlegbar ist.

3. Sensorelement nach Anspruch 1 oder 2, **dadurch gekennzeichnet, dass** die Elektroden (12a, 12b) der elektrochemischen Pumpzelle über einen trimmbaren Widerstand (26) miteinander verbunden sind.

4. Sensorelement nach einem der Ansprüche 1 bis 3, **dadurch gekennzeichnet, dass** die zweite und / oder die weitere Elektrode (12b, 12b1, 12b2, 15b, 15b1, 15b2) als Mischpotentialelektrode ausgebildet ist.

5. Sensorelement nach einem der vorhergehenden Ansprüche, **dadurch gekennzeichnet, dass** im gasdicht abgeschlossenen inneren Raum (14, 14a, 14b) des Sensorelements eine Schicht (22, 22a, 22b) eines sauerstoffspeichernden Materials vorgesehen ist.

6. Sensorelement nach einem der vorhergehenden Ansprüche, **dadurch gekennzeichnet, dass** zwei Heizelemente (16, 24a, 24b) zur Beheizung des Sensorelements vorgesehen sind, wobei eines der Heizelement (24a, 24b) im Bereich der Schicht (22, 22a, 22b) eines sauerstoffspeichernden Materials positioniert ist, sodass die Schicht (22, 22a, 22b) eines sauerstoffspeichernden Materials auf eine von den Restkompartimenten des Sensorelements abweichende Temperatur erwärmt wird.

7. Verfahren zur Bestimmung von Gaskomponenten in Gasgemischen, insbesondere in Abgasen von Verbrennungsmotoren, unter Verwendung eines Sensorelements (10) nach einem der Ansprüche 1 bis 6, **gekennzeichnet durch** die Schritte:
- Akkumulation einer der Menge an zu bestimmender Gaskomponente äquivalenten Menge an Sauerstoff in dem gasdicht abgeschlossenen inneren Raum (14, 14a, 14b) und
- Nachfolgender Entfernung des akkumulierten Sauerstoffs **durch** Anlegen einer Pumpspannung an die Elektroden (12a, 12a1, 12a2, 15a, 15a1, 15a2, 15b, 15b1, 15b2) mindestens einer der elektrochemischen Pumpzellen.

8. Verfahren nach Anspruch 7, **dadurch gekennzeichnet, dass** während der Entfernung des akkumulierten Sauerstoffs an die Elektroden (12a, 12a1, 12a2, 15a, 15a1, 15a2, 15b, 15b1, 15b2) beider elektrochemischer Pumpzellen eine Pumpspannung angelegt wird, wobei sich die an eine erste der mindestens zwei elektrochemischen Zellen angelegte Pumpspannung von der an eine zweite der mindestens zwei elektrochemischen Pumpzellen angelegte Pumpspannung in ihrer Höhe unterscheidet.

9. Verfahren nach Anspruch 7 oder 8, **dadurch gekennzeichnet, dass** während der Entfernung des akkumulierten Sauerstoffs an die mindestens eine erste Elektrode (15a, 15a1, 15a2) eine konstante Pumpspannung gegenüber einer einer Referenzgasatmosphäre ausgesetzten weiteren Elektrode (15b, 15b1, 15b2) angelegt wird.

10. Verfahren nach Anspruch 7 oder 8, **dadurch gekennzeichnet, dass** während der Entfernung des akkumulierten Sauerstoffs an die mindestens eine erste Elektrode (12a, 12a1, 12a2) eine konstante Pumpspannung gegenüber einer dem Gasgemisch ausgesetzten weiteren Elektrode (12b, 12b1, 12b2) angelegt wird.

11. Verwendung eines Sensorelements nach einem der Ansprüche 1 bis 6 oder eines Verfahrens nach einem der Ansprüche 7 bis 10 zur Bestimmung des Stickoxidgehaltes in Abgasen von Verbrennungsmotoren.

## Claims

1. Sensor element of a gas sensor for determining gas components in gas mixtures, in particular in exhaust gases of internal combustion engines, comprising
at least one electrochemical measuring cell, which is formed by a ceramic substrate and electrodes applied thereto, wherein the sensor element comprises at least one interior chamber (14, 14a, 14b) which is sealed in a gas-tight manner and positioned in which there is at least one first internal electrode (12a, 15a, 12a1, 12a2, 15a1, 15a2), which together with a second and a further electrode (12b, 12b1, 12b2, 15b, 15b1, 15b2) of the sensor element respectively forms an electrochemical cell, wherein one of the electrochemical cells is an electrochemical pumping cell, and wherein the second and/or further electrode (12b, 12b1, 12b2, 15b, 15b1, 15b2) is exposed to the gas mixture and wherein a further interior gas chamber (50) is provided, which is in fluid-conducting contact with the gas mixture and provided in which there is an electrode (58a, 59a) of the sensor element that selectively catalytically decomposes molecular oxygen contained in the gas mixture.

2. Sensor element according to Claim 1, **characterized in that** both electrochemical cells are electrochemical pumping cells, to the electrodes (12a, 12a1, 12a2, 12b, 12b1, 12b2, 15a, 15a1, 15a2, 15b, 15b1, 15b2) of which a pumping voltage can be applied at least in phases.

3. Sensor element according to Claim 1 or 2, **characterized in that** the electrodes (12a, 12b) of the electrochemical pumping cell are connected to one another by way of a trimmable resistor (26).

4. Sensor element according to one of Claims 1 to 3, **characterized in that** the second and/or further electrode (12b, 12b1, 12b2, 15b, 15b1, 15b2) is formed as a mixed potential electrode.

5. Sensor element according to one of the preceding claims, **characterized in that** in the gas-tight sealed interior chamber (14, 14a, 14b) of the sensor element there is provided a layer (22, 22a, 22b) of an oxygen-storing material.

6. Sensor element according to one of the preceding claims, **characterized in that** two heating elements (16, 24a, 24b) are provided for heating the sensor element, wherein one of the heating elements (24a, 24b) is positioned in the region of the layer (22, 22a, 22b) of an oxygen-storing material, so that the layer (22, 22a, 22b) of an oxygen-storing material is heated to a temperature deviating from the remaining compartments of the sensor element.

7. Method for determining gas components in gas mixtures, in particular in exhaust gases of internal combustion engines, by using a sensor element (10) according to one of Claims 1 to 6, **characterized by** the steps of:
- accumulating in the gas-tight sealed interior chamber (14, 14a, 14b) a quantity of oxygen equivalent to the quantity of gas component to be determined; and
- subsequently removing the accumulated oxygen by applying a pumping voltage to the electrodes (12a, 12a1, 12a2, 15a, 15a1, 15a2, 15b, 15b1, 15b2) of at least one of the electrochemical pumping cells.

8. Method according to Claim 7, **characterized in that** during the removal of the accumulated oxygen a pumping voltage is applied to the electrodes (12a, 12a1, 12a2, 15a, 15a1, 15a2, 15b, 15b1, 15b2) of both electrochemical pumping cells, wherein the pumping voltage applied to a first of the at least two electrochemical cells differs in its level from the pumping voltage applied to a second of the at least two electrochemical pumping cells.

9. Method according to Claim 7 or 8, **characterized in that** during the removal of the accumulated oxygen a constant pumping voltage is applied to the at least one first electrode (15a, 15a1, 15a2), relative to a further electrode (15b, 15b1, 15b2) that is exposed to a reference gas atmosphere.

10. Method according to Claim 7 or 8, **characterized in that** during the removal of the accumulated oxygen a constant pumping voltage is applied to the at least one first electrode (12a, 12a1, 12a2), relative to a further electrode (12b, 12b1, 12b2) that is exposed to the gas mixture.

11. Use of a sensor element according to one of Claims 1 to 6 or a method according to one of Claims 7 to 10 for determining the nitrogen oxide content in exhaust gases of internal combustion engines.

## Revendications

1. Elément capteur d'un capteur de gaz pour la détermination de constituants gazeux dans des mélanges gazeux, notamment dans des gaz d'échappement de moteurs à combustion interne, comprenant au moins une cellule de mesure électrochimique formée d'un substrat céramique sur lequel sont disposées des électrodes, dans lequel l'élément capteur comprend au moins un espace interne hermétiquement fermé aux gaz (14, 14a, 14b), dans lequel est positionnée au moins une première électrode interne (12a, 15a, 12a1, 12a2, 15a1, 15a2) qui, avec une deuxième électrode et une électrode supplémentaire (12b, 12b1, 12b2, 15b, 15b1, 15b2) de l'élément capteur, forme des cellules électrochimiques respectives, dans lequel l'une des cellules électrochimiques est une cellule de pompage électrochimique, et dans lequel la seconde électrode et/ou l'électrode supplémentaire (12b, 12b1, 12b2, 15b, 15b1, 15b2) est/sont exposée(s) au mélange gazeux et dans lequel il est prévu un espace interne de gaz supplémentaire (50) en contact conducteur de fluide avec le mélange gazeux, dans lequel il est prévu une électrode (58a, 59a) de l'élément capteur qui décompose catalytiquement de manière sélective de manière catalytique l'oxygène moléculaire contenu dans le mélange gazeux.

2. Elément capteur selon la revendication 1, **caractérisé en ce que** les deux cellules électrochimiques sont des cellules de pompage électrochimiques sur les électrodes (12a, 12a1, 12a2, 12b, 12b1, 12b2, 15a, 15a1, 15a2, 15b, 15b1, 15b2) desquelles peut être appliquée au moins par phases une tension de pompage.

3. Elément capteur selon la revendication 1 ou 2, **caractérisé en ce que** les électrodes (12a, 12b) de la cellule de pompage électrochimique sont connectées les unes aux autres par l'intermédiaire d'une résistance réglable (26).

4. Elément capteur selon l'une quelconque des revendications 1 à 3, **caractérisé en ce que** la deuxième électrode et/ou l'électrode supplémentaire (12b, 12b1, 12b2, 15b, 15b1, 15b2) est/sont réalisée(s) sous la forme d'une électrode de potentiel mixte.

5. Elément capteur selon l'une quelconque des revendications précédentes, **caractérisé en ce qu'**il est prévu une couche (22, 22a, 22b) d'un matériau accumulateur d'oxygène dans l'espace interne hermétiquement fermé au gaz (14, 14a, 14b) de l'élément capteur.

6. Elément capteur selon l'une quelconque des revendications précédentes, **caractérisé en ce qu'**il est prévu deux éléments chauffants (16, 24a, 24b) destinés à chauffer l'élément capteur, dans lequel un élément chauffant (24a, 24b) est positionné dans la région de la couche (22, 22a, 22b) d'un matériau accumulateur d'oxygène de manière à ce que la couche (22, 22a, 22b) de matériau accumulateur d'oxygène soit chauffée à une température différente de celle des compartiments restants de l'élément capteur.

7. Procédé pour la détermination de constituants gazeux dans des mélanges gazeux, notamment dans des gaz d'échappement de moteurs à combustion interne, par utilisation d'un élément capteur (10) selon l'une quelconque des revendications 1 à 6, **caractérisé par** les étapes consistant à :
- accumuler une quantité d'oxygène équivalente à la quantité de constituant gazeux à déterminer dans l'espace interne hermétiquement fermé aux gaz (14, 14a, 14b), et
- éliminer ensuite l'oxygène accumulé par application d'une tension de pompage aux électrodes (12a, 12a1, 12a2, 15a, 15a1, 15a2, 15b, 15b1, 15b2) d'au moins l'une des cellules de pompage électrochimiques.

8. Procédé selon la revendication 7, **caractérisé en ce que**, pendant l'élimination de l'oxygène accumulé, une tension de pompage est appliquée aux électrodes (12a, 12a1, 12a2, 15a, 15a1, 15a2, 15b, 15b1, 15b2) des deux cellules de pompage électrochimiques, dans lequel la valeur de la tension de pompage appliquée à une première des au moins deux cellules électrochimiques est différente d'une tension de pompage appliquée à une deuxième des au moins deux cellules de pompage électrochimiques.

9. Procédé selon la revendication 7 ou 8, **caractérisé en ce que**, pendant l'élimination de l'oxygène accumulé, une tension de pompage constante est appliquée à l'au moins une première électrode (15a, 15a1, 15a2) par rapport à une électrode supplémentaire (15b, 15b1, 15b2) exposée à une atmosphère de référence.

10. Procédé selon la revendication 7 ou 8, **caractérisé en ce que**, pendant l'élimination de l'oxygène accumulé, une tension de pompage constante est appliquée à l'au moins une première électrode (12a, 12a1, 12a2) par rapport à une électrode supplémentaire (12b, 12b1, 12b2) exposée au mélange gazeux.

11. Utilisation d'un élément capteur selon l'une quelconque des revendications 1 à 6 ou d'un procédé selon l'une quelconque des revendications 7 à 10 pour déterminer la teneur en oxyde d'azote dans les gaz d'échappement de moteurs à combustion externe.
